# EUROPEAN PATENT SPECIFICATION

(11) **EP 2 950 053 B1**
(45) Date of publication and mention of the grant of the patent: **13.09.2017**
(21) Application number: 15168744.9
(22) Date of filing: 21.05.2015
(51) Int. Cl.: G01D 4/00

(54) **ASSEMBLY OF A CONSUMPTION METER AND A SENSOR DEVICE**
ANORDNUNG EINES VERBRAUCHSZÄHLERS UND EINER SENSORVORRICHTUNG
ASSEMBLAGE D'UN COMPTEUR DE CONSOMMATION ET D'UN DISPOSITIF DE DÉTECTION

(30) Priority: 26.05.2014 NL 2012883
(43) Date of publication of application: 02.12.2015
(73) Proprietor: Engie S.A., 92400 COURBEVOIE (FR)
(72) Inventor: Steitner, Lucas Matthias, 3562 AJ UTRECHT (NL)
(74) Representative: Geurts, Franciscus Antonius

(56) References cited:
- EP-A1- 1 596 164
- EP-A1- 2 634 537
- EP-A2- 0 854 557
- DE-A1- 10 032 755
- FR-A1- 2 670 005

## Description

### BACKGROUND OF THE INVENTION

The invention provides an assembly of a consumption meter and a sensor device for monitoring the consumption meter, wherein the consumption meter comprises a transparent plate with behind it a roll counter and/or circulating disc.

A known assembly for monitoring an electricity meter comprises an optical sensor directing a light beam to the circulating disc of the electricity meter, wherein the passing of the present coloured area on the serrated circumference is monitored from the reflection differences of the circulating disc. The reliability of this known optical sensor depends strongly on the proper placement on the consumption meter.

An assembly for monitoring an electricity meter is known from EP 0 854 557A2 disclosing a remote meter reading apparatus, which is provided for retrofitting to an electricity meter. The apparatus comprises a transparent perspex template forming a first portion of a housing, which template is bonded to a window of the electricity meter, such that a Ferraris disc appears centrally within an aperture of the template. The remote meter reading apparatus further comprises an inner cover and a printed circuit board. The circuit board is retained in position by lugs with an LED and a photodetector positioned on the underside of the circuit board. When assembled the LED and the photodetector sit in shrouds, respectively, which extend through the inner cover towards the aperture in the template.

Similar assemblies using wide spreading light sources are known from EP 1 596 164 A1, EP 2 634 537 A1, DE 100 32 755 A1 and FR 1 670 005 A1.

It is a purpose of the invention to provide an assembly of the above type, wherein a reliable monitoring of the consumption meter is effectuated.

### SUMMARY OF THE INVENTION

The invention provides an assembly of a consumption meter and a sensor device for monitoring the consumption meter, wherein the consumption meter comprises a transparent plate with behind it a roll counter and/or circulating disc, which rotates about a rotation axis and is provided with an indication at the outer circumference for monitoring the circulation of the roll counter or the circulating disc, wherein the sensor device is secured to the opposite outer side of the transparent plate, wherein the sensor device comprises a lighting system with a light source and a light sensor, the light beam of the lighting system being directed from the light source to the outer circumference of the roll counter or the circulating disc, wherein the light beam forms a straight line on an imaginary straight projection plane which extends parallel to and at a distance from the transparent plate, wherein the light line is at an angle with respect to a direction of rotation of the outer circumference of the roll counter or circulating disc.

The sensor device according to the invention illuminates the outer circumference of the roll counter or the circulating disc with a light beam forming an elongated line thereon. The illumination of the outer circumference is therefore independent of the exact location of the light source since the circumference is illuminated with a light line. The outer circumference can be positioned exactly in the center of the light line, but it may also lie somewhat outside. Due to the location at an angle, the outer circumference will be scanned over the entire width. The light of the light source falls within the spectrum with ultraviolet light, infrared light and the intermediate visible light. The reflection response of the outer circumference has a repetitive nature with which the circulation of the roll counter or the circulating disc can be derived. The consumption recorded by the consumption meter can be derived from the circulation.

In an embodiment the light line is diagonally to the direction of rotation of the outer circumference of the roll counter or the circulation disc.

Alternatively formulated the light line is diagonally to the rotation axis.

In an embodiment the sensor device comprises a housing in which the lighting system is accommodated, wherein the housing comprises an outer contour with straight sides which are at an right angle relative to each other, wherein the light line is diagonally to the straight sides. The housing comprises an outer contour corresponding to the contour of a rectangular transparent plate of the consumption meter. The housing therefore forms a placement aid by placing the sensor device on the transparent plate, wherein the light line comes naturally diagonally to the direction of rotation of the roll counter or the circulating disc.

In an embodiment the lighting system is provided with a first channel into which the light source is directed, wherein the first channel ends opposite to the light source or becomes an elongated first opening with a constant width over the length. The channel and the first opening take care of de bundling and confinement of the light to the light line.

In an embodiment the first channel is confined by opposite straight inner faces which converge to the first opening. The inner faces are preferably smooth or light reflecting surfaces.

In an embodiment the sensor device is provided with a bottom plate of which the underside is directed to the transparent plate, wherein the first opening is situated in the bottom plate and the first channel extends upwards therefrom.

In an embodiment the first channel extends through a first sleeve upstanding from the bottom plate.

In an embodiment the light sensor is focused on the light beam. As a result, light variations from outside the light line are ignored in order to prevent that ambient light adversely affects the observation.

In an embodiment the lighting system is provided with a second channel leading to the light sensor, wherein the second channel begins with or is a continuation of an elongated second opening with a constant width over the length. The light sensor is only receptive for light that is reflected from the light line by means of the second channel.

In an embodiment the second channel is confined by opposite straight inner faces which converge to the second opening. These inner faces are preferably smooth or light reflecting surfaces.

In an embodiment the sensor device is provided with a bottom plate of which the underside is directed to the transparent plate, wherein the second opening is situated in the bottom plate and the second channel extends upwards therefrom.

In an embodiment the second channel is confined by opposite straight inner faces which converge to the second opening.

In an embodiment the first opening and the second opening are situated in the longitudinal direction in extension of each other.

In an embodiment the sensor device comprises a housing with the lighting system and a holder for the housing, wherein the holder is secured to the transparent plate and the housing is coupled removably to the holder. The housing may be removed from the holder to read the reading of the consumption meter, for example for verification or to record the initial reading when the sensor device for incremental monitoring is deployed. Thereafter, the consumption meter can be replaced again.

In an embodiment the holder is at least partly transparent such that the reading may be read easily through the holder.

In an embodiment the holder is provided with an opening for passage of the light beam from the housing such that the holder is not an obstacle for the optical working.

In an embodiment the assembly comprises a signal processing unit with a processor connected to the light sensor, wherein the signal processing unit is adapted to recognize cyclic patterns in the light reflection of the outer circumference of the roll counter or the circulating disc and to deliver a signal indicative for passing of a cyclic pattern.

The various aspects and features described in the specification or claims of this application and/or shown in the drawings of this application can be applied, individually, wherever possible. These individual aspects can be made subject of divisional patent applications. This applies in particular to the aspects and features described in the attached dependent claims.

### SHORT DESCRIPTION OF THE DRAWINGS

The invention will be explained by means of a number of example embodiments shown in the accompanying figures. Shown is in:
Figure 1 a meter box and an assembly incorporated in the meter box for processing measurement data of the meter box according to the invention;
Figure 2 the assembly for processing measurement data according to figure 1 in a preceding stage of mounting thereof;
Figure 3 an exploded view of an optical sensor of the assembly according to figure 1; and
Figures 4A and 4B an isometric view and a straight view of some parts of the optical sensor according to figure 3.

### DETAILED DESCRIPTION OF THE DRAWINGS

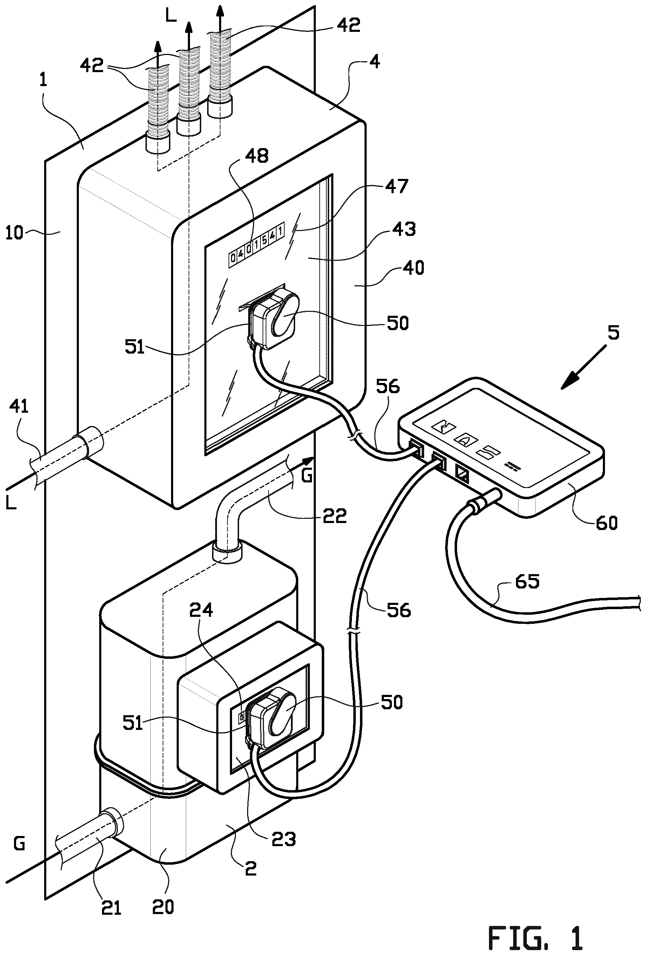

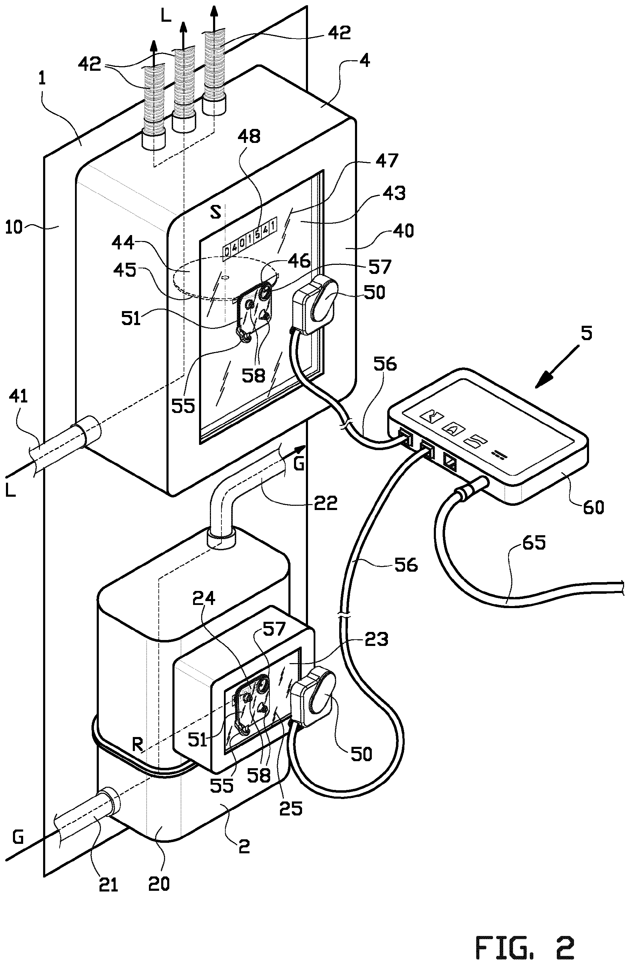

Figure 1 shows a meter box 1 comprising a rear wall 10 with a gas meter 2 and an electricity meter 4 mounted thereon. As is also shown in figure 2, the gas meter 2 is provided with a housing 20 with an incoming gas conduit 21 and an outgoing gas conduit 22. The gas meter 2 comprises a non-shown first measuring device incorporated in the housing 20 for measuring the amount of gas G passing through the gas meter 2. The first measuring device drives an analogue gas consumption counter at the view side of the housing 20 for showing an actual, cumulative gas consumption value being representative for the amount of gas G that has passed through the gas meter 2 up to that time. The gas consumption counter 23 is provided with a first roll counter 24 with numbers behind a glass plate 25. The counting rolls 24 rotate about a first rotation axis R.

The electricity meter 4 is provided with a housing 40 with an incoming electricity conduit 41 and three outgoing electricity conduits 42. The electricity meter 4 comprises a non-shown second measuring device incorporated in the housing 40 for measuring the amount of electricity L passing through the electricity meter 4. The second measuring device drives an analogue electricity consumption counter 43 at the view side of the housing 40 for showing an actual, cumulative electricity consumption value being representative for the amount of electricity L that has passed the electricity meter 4 up to that time. The electricity consumption counter 43 is located behind a glass plate 47. The electricity consumption counter 43 is provided with an electromechanical second consumption indicator formed as a circulating disc 44 coupled rotatably to housing 40. The circulating disc 44 rotates about a second rotation axis S with a velocity being in a predetermined ratio to the amount of electricity L flowing through the electricity meter 4. The circulating disc 44 is in the rotation direction at the circumferential edge 45 thereof provided with a coloured area 46. The colour of the coloured area 46 deviates richly in contrast from the colour of the remaining of the serrated circumferential edge 45. During a complete circulation of the circulating disc 44 the passing of the coloured area 46 along the view side of the housing 40 can be monitored. The circulating disc 44 drives a second roll counter 48 with numbers with which the cumulative consumption is displayed.

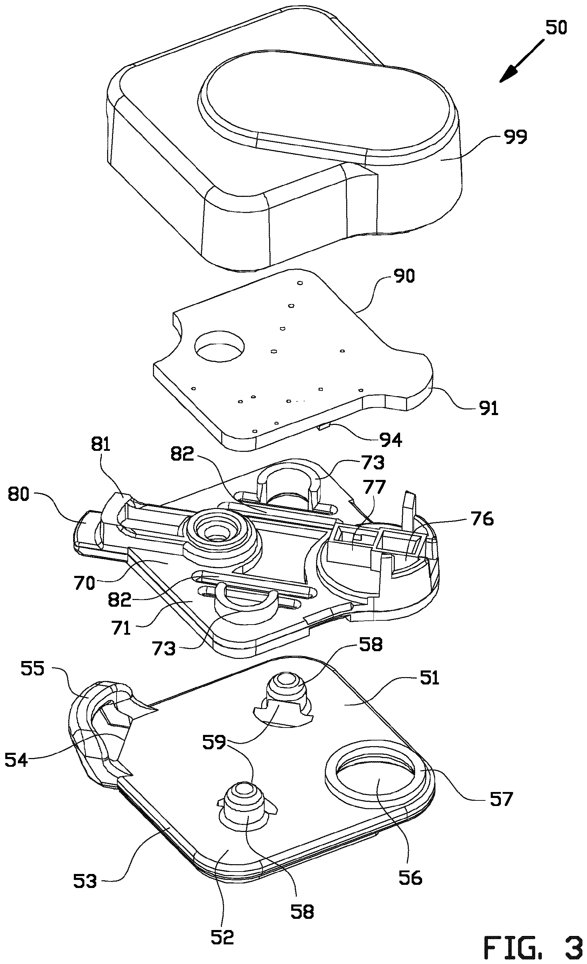

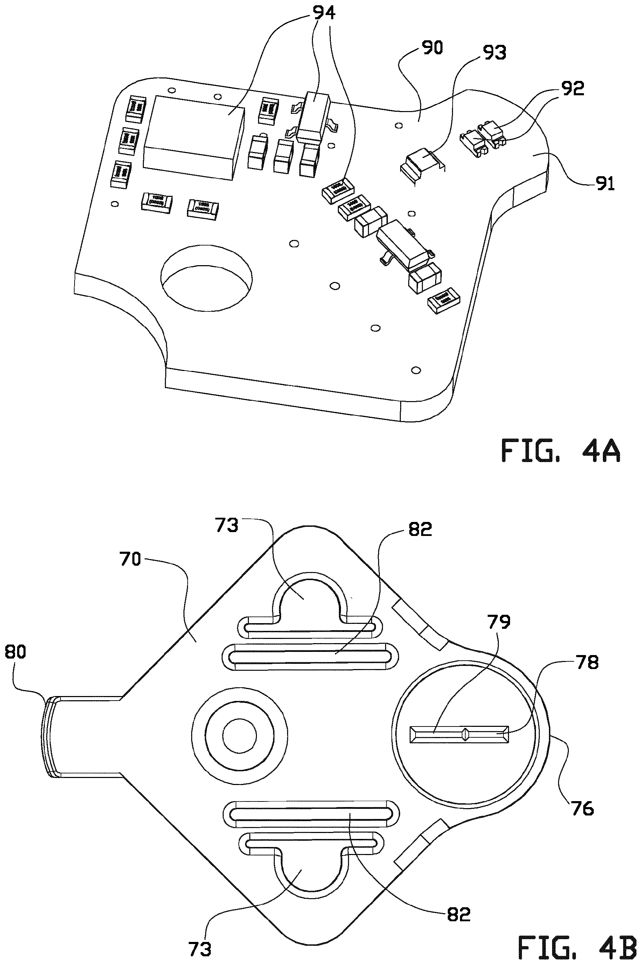

The meter box 1 is provided with an assembly 5 for processing the measuring data of the meter box. In this example, the assembly 5 comprises two identical optical sensors 50 being secured to the gas meter 2 and the electricity meter 4 for monitoring the running of the gas consumption counter 23 or the electricity consumption counter 43, respectively. One of the sensors 50 is shown in exploded view in figure 3, wherein some parts thereof are shown in straight views in figures 4A and 4B.

The optical sensor 50 comprises a separate holder 51 which is made of a transparent plastic such as polycarbonate. The holder 51 comprises a straight bottom plate 52 with a quadrangular contour with rounded corners and a circumferential edge upstanding therefrom. Closest to one of the rounded corners is the holder 51 provided with a through opening 56 with around it a sleeve 57 upstanding from the bottom plate 52. At the opposite side, the holder 51 is provided with a chamfer 54 and a receiving bracket 55 upstanding therefrom. The holder 51 is further provided with two brackets 58 with hook lugs 58 upstanding from the bottom plate 51.

The optical sensor 50 comprises a plastic base part 70 to which a plastic lid 99 is secured. The base part 70 comprises a straight bottom plate 71 with a quadrangular contour with rounded corners. As shown in figure 3B is the base part 70 at the underside closest to one of the rounded corners provided with a wall section 80 with a circular circumference which is recessed with respect to the bottom plate 71. In this wall section 80, a first elongated opening 78 and a second elongated opening 79 are formed in a row with both a rectangular contour. These openings 78, 79 have a constant width over the entire length. The openings 78, 79 form slits having a length which is at least three times the width. On the upper side which is located below the lid 99, the base part 70 is provided with a first hollow sleeve 76 and a second hollow sleeve 77, of which the elongated openings 78, 79 form the exits at the underside. At the inside, the hollow sleeves 76, 77 have straight inner faces converging to the circumferential edges of the elongated openings 78, 79.

The base part 71 comprises on the opposite corner an insertion tab 80 which fits under the receiving bracket 55 of the holder 51, and two openings 73 in which the hook lugs 59 of the holder 51 can engage. Along these openings 73 is located an elongated hole 82 for local flexibility of the material at these openings 73. The base part 71 comprises a cable channel 74 extending towards the projection 80, over which a strain relief extends. A circuit board 90 is fixed to the base part 71, which is completely covered by the lid 99 so as to form a unit.

The circuit board 90 has a substantially rectangular contour, wherein the circuit board 90 at one corner side is provided with a projection 91 extending from the quadrangular contour on which in a row two electronic light sources 92 and at a distance thereof an electronic light sensor 93 are secured. The light sources are LED's of which the light has a specific colour or wave length giving a strong reflection response to the roll counter 24 or the circulating disc 44. The light of the light sources 92 falls within the spectrum with ultraviolet light, infrared light and the intermediate visible light. The light sources 92 and the light sensor 93 are surface mounted (SMD) components which are connected to electronic components 94 via the circuit board 90 for the signal processing of the light sensor 93. In the mounted state, the circuit board 90 rests on the first hollow sleeve 76 and the second hollow sleeve 77 at the location of the projection 91. In this state, the light sources 92 are located in the first hollow sleeve 76 and the light beams thereof are directed towards the first opening 78 via the first hollow sleeve 76. The light sensor 93 is located in the second hollow sleeve 77 and is only receptive for light occurring thereon through the second opening 79 and via the second hollow sleeve 77. The light beam exiting the first opening 78 forms hence a straight light line with a substantially constant width over the length on an imaginary reflection plane extending parallel to and at a short distance, about 5-10 millimetre, from the bottom plate 71. The light sensor 93 is only focused on light reflected from this light line. With respect to the rectangular outer contour of the optical sensor 50, the light line is diagonally, at an angle, of 45 degrees, to the straight faces of the outer contour of the holder 51, the bottom plate 71 or the lid 99.

The electronic components 94 form a signal processing unit with a processor in an integrated circuit (IC). This signal processing unit is adapted to recognize cyclic patterns in the received light signal and to deliver counting signals. The cyclic patterns are formed by the light reflection of the circulating disc 44 of the electricity consumption counter 43 or from a counting roll of the first roll counter 24. The signal processing unit is thereto in this example via a first data cable 56, a switch 60 and a second data cable 65 connected to a non-shown computer. Per revolution of the circulating disc 44 or the counting roll, the signal processing unit delivers a counting signal for further processing, for example by the computer which converts the counting signal to the factual energy consumption for further processing, for example transmitting hereof to the energy supplier or providing a clear overview hereof on a screen.

The separate holder 51 of the optical sensor 50 is secured to the glass by means of a transparent adhesive layer. At the electricity meter 4, the opening 56 is located directly above the circumferential edge of the circulating disc 44 and, at the gas meter 3, the opening 56 the opening is located directly above the right counting roll of the first roll counter because these are circulating the fastest. The unit of the base part 71 and the lid 99 under which the circuit board is secured, is subsequently plugged with the insertion tab 80 under the receiving bracket 55 and is pushed downwards thereafter, whereby the hook lugs 59 are received in the two openings 73 and are clipped behind the edge thereof. It is always possible to remove the unit temporarily to read out the roll counters through the transparent holder 51. The reflecting light line as described above on the imaginary reflection plane is in the fixed state diagonally to the direction of rotation of the circulating disc 44 or of the latest counting roll of the roll counter 24. Alternatively formulated, the light lines are diagonally to the rotation axes R, S thereof, and the light line is projected on the outer circumferential surface of the circulating disc 44 or the latest counting roll of the roll counter 24.

The circulating disc or roll illuminated by the light sources 92 causes a reflection pattern when rotating. This reflection pattern is received by the light sensor 93, wherein ambient noise is counteracted by the rectilinear sensitivity accomplished by the second sleeve. The reflection pattern is recognised by the signal processing unit and at recurrence a counting signal is delivered per cycle.

The above description is included to illustrate the operation of preferred embodiments of the invention, and not to limit the scope of the invention. Starting from the above explanation many variations will be evident to a skilled person, which fall within the scope of the present invention, which is solely defined by the appended claims.

## Claims

1. Assembly of a consumption meter (4) and a sensor device (50) for monitoring the consumption meter (4), wherein the consumption meter (4) comprises a transparent plate (47) with behind it a roll counter (43) and/or circulating disc (44), which rotates about a rotation axis (S) and is provided with an indication (46) at the outer circumference (45) for monitoring the circulation of the roll counter (43) or the circulating disc (44), wherein the sensor device (50) is secured to the outer side of the transparent plate (47), the sensor device (50) comprising a lighting system with a light source (92) and a light sensor (93), wherein the light beam of the lighting system from the light source (92) is directed to the outer circumference (45) of the roll counter (43) or the circulating disc (44), **characterized in that** the light beam forms a straight line on an imaginary straight projection plane which extends parallel to and at a distance from the transparent plate (47), wherein the light line is at an angle with respect to a direction of rotation of the outer circumference (45) of the roll counter (43) or circulating disc (44).

2. Assembly according to claim 1, wherein the light line is diagonally to the direction of rotation of the outer circumference (45) of the roll counter (43) or the circulation disc (44).

3. Assembly according to any one of the preceding claims, wherein the light line is diagonally to the rotation axis (S).

4. Assembly according to any one of the preceding claims, wherein the sensor device (50) comprises a housing in which the lighting system is accommodated, the housing comprising an outer contour with straight sides which are at an right angle relative to each other, wherein the light line is diagonally to the straight sides.

5. Assembly according to any one of the preceding claims, wherein the lighting system is provided with a first channel into which the light source (92) is directed, wherein the first channel ends opposite to the light source (92) or becomes an elongated first opening (78) with a constant width over the length.

6. Assembly according to claim 5, wherein the first channel is confined by opposite straight inner faces which converge to the first opening (78).

7. Assembly according to claim 5 or 6, wherein the sensor device (50) is provided with a bottom plate (71) of which the underside is directed to the transparent plate (47), wherein the first opening (78) is situated in the bottom plate (71) and the first channel extends upwards therefrom, wherein the first channel preferably extends through a first sleeve (76) upstanding from the bottom plate (71).

8. Assembly according to any one of the preceding claims, wherein the light sensor (93) is focused on the light beam, wherein the lighting system is preferably provided with a second channel leading to the light sensor (93), wherein the second channel begins with or is a continuation of an elongated second opening (79) with a constant width over the length.

9. Assembly according to claim 8, wherein the second channel is confined by opposite straight inner faces which converge to the second opening (79).

10. Assembly according to claim 8 or 9, wherein the sensor device is provided with a bottom plate (71) of which the underside is directed to the transparent plate (47), wherein the second opening (79) is situated in the bottom plate (71) and the second channel extends upwards therefrom, wherein the second channel extends through a second sleeve (77) upstanding from the bottom plate (71).

11. Assembly according to 5 and 8, wherein the first opening (78) and the second opening (79) are situated in the longitudinal direction in each other's prolongations.

12. Assembly according to any one of the preceding claims, wherein the sensor device (50) comprises a housing with the lighting system and a holder (51) for the housing, wherein the holder is secured to the transparent plate (47) and the housing is coupled removably to the holder (51).

13. Assembly according to any one of the preceding claims, wherein the holder (51) is at least partly transparent.

14. Assembly according to any one of the preceding claims, wherein the holder (51) is provided with an opening (56) for passage of the light beam from the housing.

15. Assembly according to any one of the preceding claims, comprising a signal processing unit (94) with a processor connected to the light sensor (93), the signal processing unit being adapted to recognize cyclic patterns in the light reflection of the outer circumference (45) of the roll counter (43) or the circulating disc (44) and to deliver a signal indicative for passing of a cyclic pattern.

## Patentansprüche

1. Baugruppe eines Verbrauchszählers (4) und einer Sensorvorrichtung (50) zum Überwachen des Verbrauchszählers (4), wobei der Verbrauchszähler (4) eine transparente Platte (47) mit einem Rollenzähler (43) und/oder einer zirkulierenden Scheibe (44) dahinter, welche (r) sich um eine Drehachse (S) dreht und mit einer Anzeige (46) am äußeren Umfang (45) zum Verfolgen der Zirkulation des Rollenzählers (43) oder der zirkulierenden Scheibe (44) versehen ist, umfasst, wobei die Sensorvorrichtung (50) an der äußeren Seite der transparenten Platte (47) befestigt ist, die Sensorvorrichtung (50) umfassend ein Lichtsystem mit einer Lichtquelle (92) und einem Lichtsensor (93), wobei der Lichtstrahl des Lichtsystems von der Lichtquelle (92) auf den äußeren Umfang (45) des Rollenzählers (43) oder der zirkulierenden Scheibe (44) gerichtet ist, **dadurch gekennzeichnet, dass** der Lichtstrahl eine gerade Linie auf einer imaginären geraden Projektionsebene, die sich parallel zu und in einem Abstand von der transparenten Platte (47) erstreckt, bildet, wobei sich die Lichtlinie in einem Winkel in Bezug auf eine Drehrichtung des äußeren Umfangs (45) des Rollenzählers (43) oder der zirkulierenden Scheibe (44) befindet.

2. Baugruppe gemäß Anspruch 1, wobei die Lichtlinie diagonal zu der Drehrichtung des äußeren Umfangs (45) des Rollenzählers (43) oder der zirkulierenden Scheibe (44) ist.

3. Baugruppe gemäß einem der vorhergehenden Ansprüche, wobei die Lichtlinie diagonal zu der Drehachse (S) ist.

4. Baugruppe gemäß einem der vorhergehenden Ansprüche, wobei die Sensorvorrichtung (50) ein Gehäuse, in welchem das Lichtsystem untergebracht ist, umfasst, das Gehäuse umfassend eine äußere Kontur mit geraden Seiten, welche in einem rechten Winkel im Verhältnis zueinander angeordnet sind, wobei die Lichtlinie diagonal zu den geraden Seiten ist.

5. Baugruppe gemäß einem der vorhergehenden Ansprüche, wobei das Lichtsystem mit einem ersten Kanal, in welchen die Lichtquelle (92) gerichtet ist, ausgestattet ist, wobei der erste Kanal gegenüberliegend zu der Lichtquelle (92) endet oder zu einer länglichen ersten Öffnung (78) mit einer konstanten Weite über die Länge wird.

6. Baugruppe gemäß Anspruch 5, wobei der erste Kanal durch gegenüberliegende gerade innere Oberflächen, die zu der ersten Öffnung (78) konvergieren, begrenzt wird.

7. Baugruppe gemäß Anspruch 5 oder 6, wobei die Sensorvorrichtung (50) mit einer Bodenplatte (71), deren Unterseite zu der transparenten Platte (47) gerichtet ist, ausgestattet ist, wobei sich die erste Öffnung (78) in der Bodenplatte (71) befindet und der erste Kanal sich davon nach oben erstreckt, wobei der erste Kanal sich vorzugsweise durch eine erste Hülse (76) aufrecht stehend von der Bodenplatte (71) erstreckt.

8. Baugruppe gemäß einem der vorhergehenden Ansprüche, wobei der Lichtsensor (93) auf den Lichtstrahl gerichtet ist, wobei das Lichtsystem vorzugsweise mit einem zu dem Lichtsensor (93) führenden zweiten Kanal ausgestattet ist, wobei der zweite Kanal mit einer länglichen zweiten Öffnung (79) mit einer konstanten Weite über die Länge beginnt oder eine Fortführung einer solchen länglichen Öffnung (79) ist.

9. Baugruppe gemäß Anspruch 8, wobei der zweite Kanal durch gegenüberliegende gerade innere Oberflächen, die zu der zweiten Öffnung (79) konvergieren, begrenzt wird.

10. Baugruppe gemäß Anspruch 8 oder 9, wobei die Sensorvorrichtung mit einer Bodenplatte (71), deren Unterseite zu der transparenten Platte (47) gerichtet ist, ausgestattet ist, wobei die zweite Öffnung (79) in der Bodenplatte (71) befindlich ist und der zweite Kanal sich davon nach oben erstreckt, wobei sich der zweite Kanal durch eine zweite Hülse (77) aufrecht stehend von der Bodenplatte (71) erstreckt.

11. Baugruppe gemäß Anspruch 5 und 8, wobei sich die erste Öffnung (78) und die zweite Öffnung (79) in der Längsrichtung in ihren gegenseitigen Verlängerungen befinden.

12. Baugruppe gemäß einem der vorhergehenden Ansprüche, wobei die Sensorvorrichtung (50) ein Gehäuse mit dem Lichtsystem und einen Halter (51) für das Gehäuse umfasst, wobei der Halter an der transparenten Platte (47) befestigt ist und das Gehäuse abnehmbar mit dem Halter (51) verbunden ist.

13. Baugruppe gemäß einem der vorhergehenden Ansprüche, wobei der Halter (51) wenigstens teilweise transparent ist.

14. Baugruppe gemäß einem der vorhergehenden Ansprüche, wobei der Halter (51) mit einer Öffnung (56) zum Durchlass des Lichtstrahls von dem Gehäuse ausgestattet ist.

15. Baugruppe gemäß einem der vorhergehenden Ansprüche, umfassend eine Signalverarbeitungseinheit (94) mit einem mit dem Lichtsensor (93) verbundenen Prozessor, wobei die Signalverarbeitungseinheit ausgestaltet ist, zyklische Muster in der Lichtreflexion des äußeren Umfangs (45) des Rollenzählers (43) oder der zirkulierenden Scheibe (44) zu erkennen und ein Signal anzeigend das Durchlaufen eines zyklischen Musters zu liefern.

## Revendications

1. Ensemble d'un compteur de consommation (4) et d'un dispositif capteur (50) pour contrôler le compteur de consommation (4), dans lequel le compteur de consommation (4) comprend une plaque transparente (47) avec derrière elle un compteur à rouleaux (43) et/ou un disque circulant (44), qui tourne autour d'un axe de rotation (S) et est pourvu d'une indication (46) au niveau de la circonférence extérieure (45) pour contrôler la circulation du compteur à rouleaux (43) ou du disque circulant (44), dans lequel le dispositif capteur (50) est fixé au côté extérieur de la plaque transparente (47), le dispositif capteur (50) comprenant un système d'éclairage doté d'une source de lumière (92) et d'un capteur de lumière (93), dans lequel le faisceau lumineux du système d'éclairage provenant de la source de lumière (92) est dirigé vers la circonférence extérieure (45) du compteur à rouleaux (43) ou du disque circulant (44), **caractérisé en ce que** le faisceau lumineux forme une ligne droite sur un plan de projection droit imaginaire qui s'étend parallèlement à la plaque transparente (47) et à une distance de celle-ci, dans lequel la ligne de lumière se situe à un angle par rapport à une direction de rotation de la circonférence extérieure (45) du compteur à rouleaux (43) ou du disque circulant (44).

2. Ensemble selon la revendication 1, dans lequel la ligne de lumière est diagonale à la direction de rotation de la circonférence extérieure (45) du compteur à rouleaux (43) ou du disque de circulation (44).

3. Ensemble selon l'une quelconque des revendications précédentes, dans lequel la ligne de lumière est diagonale à l'axe de rotation (S).

4. Ensemble selon l'une quelconque des revendications précédentes, dans lequel le dispositif capteur (50) comprend un boîtier dans lequel le système d'éclairage est logé, le boîtier comprenant un contour extérieur avec des côtés droits qui se trouvent à un angle droit l'un par rapport à l'autre, dans lequel la ligne de lumière est diagonale aux côtés droits.

5. Ensemble selon l'une quelconque des revendications précédentes, dans lequel le système d'éclairage est pourvu d'un premier canal dans lequel la source de lumière (92) est dirigée, dans lequel le premier canal prend fin à l'opposé de la source de lumière (92) ou devient une première ouverture allongée (78) ayant une largeur constante sur la longueur.

6. Ensemble selon la revendication 5, dans lequel le premier canal est confiné par des faces intérieures droites opposées qui convergent vers la première ouverture (78).

7. Ensemble selon la revendication 5 ou 6, dans lequel le dispositif capteur (50) est pourvu d'une plaque de fond (71) dont le dessous est dirigé vers la plaque transparente (47), dans lequel la première ouverture (78) se situe dans la plaque de fond (71) et le premier canal s'étend vers le haut depuis celle-ci, dans lequel le premier canal s'étend de préférence à travers un premier manchon (76) s'élevant depuis la plaque de fond (71).

8. Ensemble selon l'une quelconque des revendications précédentes, dans lequel le capteur de lumière (93) est concentré sur le faisceau lumineux, dans lequel le système d'éclairage est de préférence pourvu d'un deuxième canal menant au capteur de lumière (93), dans lequel le deuxième canal commence avec ou est une continuation d'une deuxième ouverture allongée (79) ayant une largeur constante sur la longueur.

9. Ensemble selon la revendication 8, dans lequel le deuxième canal est confiné par des faces intérieures droites opposées qui convergent vers la deuxième ouverture (79).

10. Ensemble selon la revendication 8 ou 9, dans lequel le dispositif capteur est pourvu d'une plaque de fond (71) dont le dessous est dirigé vers la plaque transparente (47), dans lequel la deuxième ouverture (79) se situe dans la plaque de fond (71) et le deuxième canal s'étend vers le haut depuis celle-ci, dans lequel le deuxième canal s'étend à travers un deuxième manchon (77) montant depuis la plaque de fond (71).

11. Ensemble selon les revendications 5 et 8, dans lequel la première ouverture (78) et la deuxième ouverture (79) se situent dans la direction longitudinale dans leurs prolongements mutuels.

12. Ensemble selon l'une quelconque des revendications précédentes, dans lequel le dispositif capteur (50) comprend un boîtier doté du système d'éclairage et un support (51) pour le boîtier, dans lequel le support est fixé à la plaque transparente (47) et le boîtier est couplé de manière amovible au support (51).

13. Ensemble selon l'une quelconque des revendications précédentes, dans lequel le support (51) est au moins partiellement transparent.

14. Ensemble selon l'une quelconque des revendications précédentes, dans lequel le support (51) est pourvu d'une ouverture (56) pour le passage du faisceau lumineux provenant du boîtier.

15. Ensemble selon l'une quelconque des revendications précédentes, comprenant une unité de traitement de signal (94) avec un processeur connecté au capteur de lumière (93), l'unité de traitement de signal étant adapté pour reconnaître des motifs cycliques dans la réflexion de lumière de la circonférence extérieure (45) du compteur à rouleaux (43) ou du disque circulant (44) et pour émettre un signal indicatif du passage d'un motif cyclique.
